# EUROPEAN PATENT APPLICATION

(11) **EP 2 325 831 A1**
(43) Date of publication of application: **25.05.2011**
(21) Application number: 10180015.9
(22) Date of filing: 27.09.2010
(51) Int. Cl.: G09G 3/34, G01C 21/34

(54) **Display control apparatus, navigation system and display control method**

(30) Priority: 30.10.2009 JP 2009251030
(71) Applicant: AISIN AW CO., LTD., Anjo-shi, Aichi 444-1192 (JP)
(72) Inventor: Ogawa, Satoshi, Anjo-shi Aichi 444-1192 (JP)
(74) Representative: TBK

(57) **Abstract**

It is provided a display control apparatus comprising: a display unit that displays a plurality of images in respective areas on a screen; an illuminating unit that includes a plurality of light sources that are configured to be set so as to have different power consumptions each other, and that illuminates the images displayed on the display unit; a determination unit that determines a luminance need required on the screen for each of the images displayed on the display unit; and an illuminating control unit that controls the power consumptions of the light sources corresponding to the areas that display the respective images on the display unit on the basis of the determined luminance needs.

## Description

### INCORPORATION BY REFERENCE

The disclosure of Japanese Patent Application No. 2009-251030 filed on October 30, 2009 including the specification, drawings and abstract is incorporated herein by reference in its entirety.

### BACKGROUND OF THE INVENTION

### 1. Field of the Invention

The present invention relates to a display control apparatus, a navigation system and a display control method.

### 2. Description of the Related Art

Generally, there is known a navigation system. The navigation system utilizes a global positioning system (GPS), or the like, to position a current location and then displays the positioned current location on the screen of a display together with map information. In recent years, a large amount of components constitute such a navigation system. This increases the power consumption of the navigation system. As a result, not only the service life of a power supply battery decreases but also an environmental load problematically increases because of an increase in heat generated. It is an important issue to reduce power consumption in the navigation system.

To take measures against the above issue, Japanese Patent Application Publication No. 8-54249 (JP-A-8-54249), for example, describes a technique for reducing power consumption in the navigation system by automatically changing the display level of a display unit. Specifically, in the navigation system described in JP-A-8-54249, when it is not necessary to activate navigation, the backlight of the screen of a liquid crystal display is automatically turned off across the board to thereby reduce power consumption. The above navigation system determines that the navigation is not necessary to activate when a vehicle is running on a highway, such as an expressway and a toll road, and when it is determined that the vehicle continues to run on the highway, for example.

### SUMMARY OF THE INVENTION

In the above navigation system, when it is determined that navigation is not required irrespective of user's intention, the backlight of the screen is automatically turned off across the board. Therefore, even when there is an area that displays user's desired information (for example, ramp-way junction information ahead in the travelling direction while the vehicle is running on an urban expressway, or the like) within the screen, the backlight of such an area is also turned off, so there is a case where user's desired information is not displayed. In this case, in order to view the user's desired information, the user needs to conduct an operation for turning on the backlight, being turned off, of the entire screen across the board, including the area that displays the user's desired information. The operation may make the user feel inconvenient. In the above navigation system, power consumption may be reduced; however, the operation is complicated, so it is desired to improve the convenience.

The present invention provides a display control apparatus, navigation system and display control method that are convenient to a user while reducing power consumption.

A first aspect of the present invention provides a display control apparatus. The display control unit includes: a display unit that displays a plurality of images in respective areas on a screen; a illuminating unit that includes a plurality of light sources that are configured to be set so as to have different power consumptions each other, and that illuminates the images displayed on the display unit; a determination unit that determines a luminance need required on the screen for each of the images displayed on the display unit; and a illuminating control unit that controls the power consumptions of the light sources corresponding to the areas that display the respective images on the display unit on the basis of the determined luminance needs.

According to the first aspect, the luminance of each image displayed in each area on the screen may be variably controlled separately, and the luminance of the image having a low luminance need is lower than the luminance of the image having a high luminance need. Thus, the image having a high need for display to a user is displayed on the screen, while the power consumption may be effectively reduced, so a complicated operation of the user is not required. That is, the convenience for the user may be improved while the power consumption is reduced.

A second aspect of the present invention provides a navigation system. The navigation system includes: a current location detecting unit that detects a current location of a movable body; a map information acquisition unit that acquires a map information from a map information storage unit that stores map information; and the display control apparatus according to the first aspect, wherein the display control apparatus controls details displayed on a screen of the display unit on the basis of the current location of a movable body and the map information.

With the above configuration, information required by a passenger of a mobile unit is provided for the passenger, while the power consumption of the navigation system may be effectively reduced.

A third aspect of the present invention provides a display control method. The display control method includes: displaying a plurality of images in respective areas on a screen; illuminating the images with a plurality of light sources that are configured to be set so as to have different power consumptions each other; determining a luminance need required on the screen for each of the images displayed on the screen; and controlling the power consumptions of the light sources corresponding to the areas that display the respective images on the screen on the basis of the determined luminance needs.

With the above configuration, similar function and advantageous effects to those of the display control apparatus according to the first aspect may be obtained.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a block diagram that shows the configuration of a navigation system according to a first embodiment;
FIG. 2A and FIG. 2B are flowcharts that show a display control routine according to the first embodiment;
FIG. 3A is a screen view that shows an example of a normal display mode according to the first embodiment;
FIG. 3B is a screen view that shows an example of a power-saving display mode according to the first embodiment;
FIG. 4A is a screen view that shows an example of a normal display mode according to a second embodiment;
FIG. 4B is a screen view that shows an example of a power-saving display mode according to the second embodiment;
FIG. 5A is a screen view that shows an example of a normal display mode according to a third embodiment;
FIG. 5B is a screen view that shows an example of a power-saving display mode according to the third embodiment;
FIG. 6A is a screen view that shows an example of a normal display mode according to a fourth embodiment; and
FIG. 6B is a screen view that shows an example of a power-saving display mode according to the fourth embodiment.

### DETAILED DESCRIPTION OF THE EMBODIMENTS

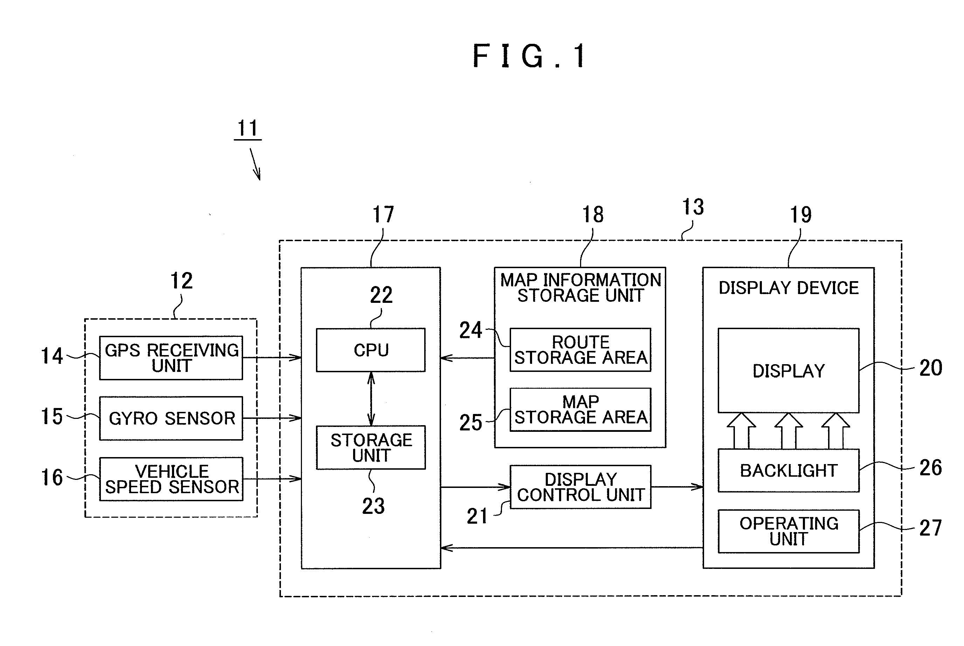

Hereinafter, a first embodiment of the present invention applied to a navigation system equipped for a vehicle will be described with reference to FIG. 1 to FIG. 3B.

As shown in FIG. 1, the navigation system 11 according to the present embodiment includes a location detector 12 and a navigation unit 13. The location detector 12 functions as a current location detecting unit for detecting the location of a host vehicle. The host vehicle is a example of a movable body. The navigation unit 13 functions as a display control apparatus that performs driving guidance on the basis of the result detected by the location detector 12.

The location detector 12 is formed of a global positioning system (GPS) receiving unit 14, a gyro sensor 15, a vehicle speed sensor 16, and the like. The GPS receiving unit 14 receives information about the absolute location of the host vehicle, such as latitude and longitude information, from an artificial satellite (not shown). The gyro sensor 15 detects bearing angle information that indicates the travelling direction of the host vehicle. The vehicle speed sensor 16 detects vehicle speed information that indicates the travelling speed of the host vehicle.

The navigation unit 13 includes a control device 17, a map information storage unit 18, a display device 19 and a display control unit 21. The control device 17 comprehensively controls the navigation system 11 overall. The map information storage unit 18 has an auxiliary storage device, such as a built-in hard disk. The display device 19 has a display 20 and displays an image. The display control unit 21 controls the display mode of the display 20.

The location detector 12, the map information storage unit 18, the display control unit 21 and the display device 19 are connected to the interface (not shown) of the control device 17. The control device 17 is formed of a central processing unit (CPU) 22 and a storage unit 23. The storage unit 23 is constructed of a ROM, a RAM, or the like. The storage unit 23 prestores programs for various processing that are executed by the CPU 22 where appropriate, and stores various pieces of information (various flags, and the like) updated during execution of the various processing where appropriate. In addition, the storage unit 23 according to the present embodiment prestores various pieces of image information. The various pieces of image information include an initial image that is displayed on the display 20 of the display device 19 when the power of the navigation system 11 turns on, a menu image for setting a destination of the host vehicle, a menu image for re-searching for a route to the destination, and the like.

The control device 17 detects the absolute location, such as latitude and longitude, of the host vehicle by radio navigation based on the result received by the GPS receiving unit 14, and calculates the relative location of the host vehicle from a reference location by autonomous navigation based on various detection signals from the gyro sensor 15 and the vehicle speed sensor 16. Then, the control device 17 combines the absolute location, expressed as a latitude and a longitude, and relative location of the host vehicle to determine the host vehicle location, and then outputs information about the host vehicle location to the display control unit 21.

In addition, when an operating unit 27 (discussed later) of the display device 19 is operated, the control device 17 outputs, to the display control unit 21, a control command for displaying an image, which corresponds to a operational mode, on the display 20 of the display device 19. For example, when a passenger of the host vehicle conducts an operation for setting a destination of the host vehicle, the control device 17 outputs, to the display control unit 21, a control command for displaying an image for setting a destination. In addition, when a destination is set, the control device 17 loads map data and route data, including the host vehicle location and the destination, from the map information storage unit 18, and searches for a route from the host vehicle location to the destination. Then, the control device 17 outputs, to the display control unit 21, a control command for displaying the found route.

The map information storage unit 18 has a route storage area 24 and a map storage area 25. The route storage area 24 stores route data that express a nationwide highway network. The map storage area 25 stores map data as map information for displaying a map image on the display 20. Then, when the control command is input from the control device 17, the route data and map data corresponding to the control command are output from the map information storage unit 18 to the control device 17.

The display device 19 includes the display 20 and a backlight 26. The display 20 has a liquid crystal panel and functions as a display unit. The backlight 26 functions as a illuminating unit for regulating the luminance of the display 20. In addition, the display device 19 is provided with the operating unit 27 that is operated by the passenger of the host vehicle. A control signal corresponding to a operational mode of the operating unit 27 operated by the passenger is output from the operating unit 27 to the control device 17.

Note that, in the display device 19 according to the present embodiment, the display 20 is a so-called touch panel display 20 that can be operated by the passenger of the vehicle. Therefore, when the display 20 is operated by the passenger, a control signal corresponding to a operational mode of the display 20 by the passenger is output from the display 20 to the control device 17 as in the case of the operating unit 27.

The backlight 26 has a plurality of light sources so as to be able to regulate the illuminating condition by pixels of the screen of the display 20. Therefore, the backlight 26 according to the present embodiment is able to vary the amount of light that illuminates an area of part of the screen of the display 20 from the amount of light that illuminates the other area. In addition, the backlight 26 is also able to change the location, shape, and the like, of the area that is illuminated with the amount of light different from that of the other area on the screen where appropriate. Of course, the backlight 26 is able to illuminate the entire screen of the display 20 with a uniform amount of light.

The display control unit 21 includes a CPU (not shown) and a memory (not shown) constructed of a RAM, a ROM, or the like. The memory prestores programs for various control processing executed by the CPU, and stores various pieces of information updated during execution of the control processing and various pieces of information input from the control device 17 where appropriate. The thus configured display control unit 21 displays an image based on the control command, or the like, from the control device 17 on the screen of the display 20. In addition, the display control unit 21 according to the present embodiment controls a mode in which the display 20 is illuminated by the backlight 26 in order to regulate the luminance of an image displayed on the screen of the display 20. Thus, in the present embodiment, the display control unit 21 also functions as a illuminating control unit.

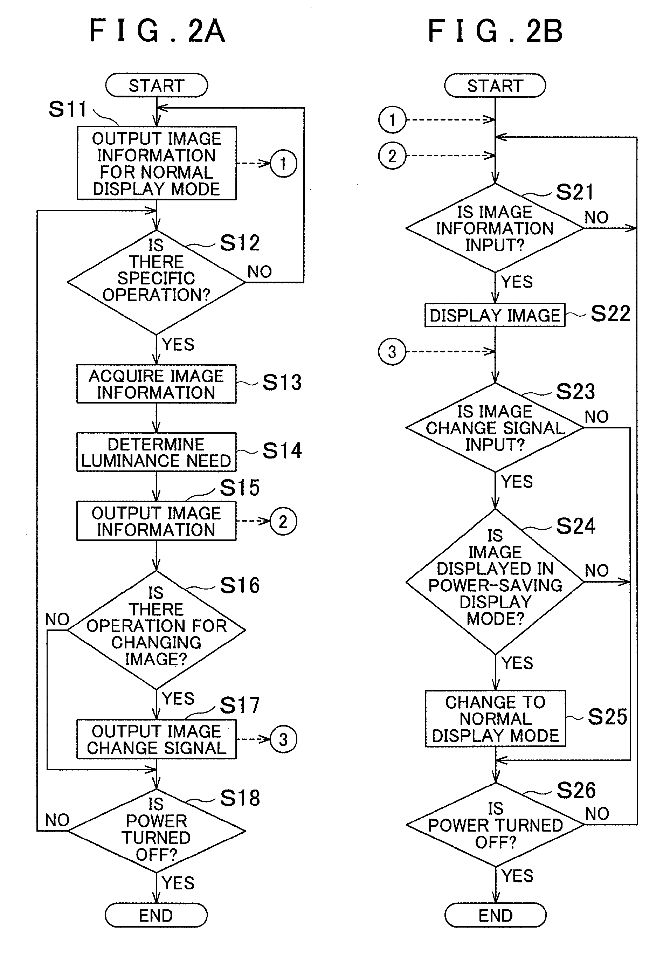

Next, a display processing routine by which the navigation unit 13 according to the present embodiment executes display control over the display 20 will be described with reference to the flowcharts shown in FIG. 2A and FIG. 2B. Note that the display processing routine includes a luminance need determination routine (S 11 to S 18 in FIG. 2A) executed by the control device 17 and a illuminating control routine (S21 to S26 in FIG. 2B) executed by the display control unit 21.

First, the luminance need determination routine will be described. The control device 17 starts the luminance need determination routine when the power of the navigation system 11 turns on on the basis of an output signal from an ignition switch (not shown).

In step S11, the control device 17 outputs, to the display control unit 21, image information for causing the display 20 of the display device 19 to display an image in a normal display mode. Specifically, when a lapse of time from when the power of the navigation system 11 turns on is shorter than or equal to a predetermined period of time (for example, 10 seconds), the control device 17 loads image information about the initial image from the storage unit 23 and then adds luminance information (hereinafter, also referred to as "normal luminance information") for setting a uniform luminance over the entire screen of the display 20 to the image information. Then, the control device 17 outputs image information, including the normal luminance information, to the display control unit 21. In addition, when the lapse of time exceeds the predetermined period of time, the control device 17 loads map data from the map information storage unit 18, and generates image information based on the map data. Then, the control device 17 adds the normal luminance information to the generated image information and then outputs the image information, including the normal luminance information, to the display control unit 21. In terms of this point, in the present embodiment, the control device 17 functions as a map information acquisition unit.

Then, in the next step S12, the control device 17 determines whether a specific operation is conducted on the display 20 of the display device 19 or the operating unit 27. The "specific operation" means an operation requiring to vary the luminance of the area of part of the screen of the display 20 from the luminance of the other area. In the present embodiment, an operation by which a plurality of images on the screen of the display 20 are displayed in an overlapping manner, an operation by which a plurality of images are displayed side by side on the screen, and the like, correspond to the "specific operation". In step S12, when it is determined that no specific operation is conducted (NO in step S12), the control device 17 goes to the above described step S11.

On the other hand, when it is determined in step S12 that the specific operation is conducted (YES in step S12), the control device 17 goes to the next step S 13, and then acquires image information of a plurality of images corresponding to the details of the specific operation from the storage unit 23 and the map information storage unit 18. For example, when a specific operation is conducted and the specific operation requires to display a map image in the lower layer and to display a menu image for re-searching for a route to a destination in the upper layer, the control device 17 loads map data for displaying a map image from the map information storage unit 18 and then generates image information based on the map data. Subsequently, the control device 17 loads image information about the menu image for re-searching for a route from the storage unit 23.

Then, in the next step S 14, the control device 17 determines the luminance need of each image on basis of a corresponding one of pieces of image information acquired in step S 13. For example, when a plurality of images are displayed on the screen of the display 20 in an overlapping manner, the control device 17 determines that, among the images displayed hierarchically in an overlapping manner, the luminance need of the image displayed in the upper layer is higher than the luminance need of the image displayed in the lower layer. In other words, the control device 17 decreases the luminance of the map image displayed in the lower layer with respect to the luminance of the menu image displayed in the upper layer. In terms of this point, in the present embodiment, the control device 17 functions as a determination unit.

Then, in the next step S15, the control device 17 adds pieces of information (hereinafter, referred to as "specific luminance information") about the luminance need determined in step S 14 to the respective pieces of image information and then outputs the image information including the specific luminance information to the display control unit 21.

Subsequently, in step S16, the control device 17 determines whether an image change operation requiring to change an image displayed on the screen of the display 20 is conducted. The "image change operation", for example, corresponds to the operation such that, when the map image is displayed on the screen, the display 20 is touched for operation or the operating unit 27 is operated in order to change or scale the map image displayed on the screen. In step S16, when it is determined that no image change operation is conducted (NO in step S16), the control device 17 goes to step S18 (discussed later).

On the other hand, when it is determined that the image change operation is conducted (YES in step S16), the control device 17 goes to the next step S17 and then outputs an image change signal to the display control unit 21.

Then, in the next step S18, the control device 17 determines whether the power of the navigation system 11 is turned off. In step S 18, when it is determined that the power of the navigation system 11 is not turned off (NO in step S 18), the control device 17 goes to step S12. When the control device 17 makes negative determination in step S16, makes negative determination in step S18 and then goes to step S12, the control device 17 determines in step S12 that the specific operation is conducted (YES in step S12), and then sequentially executes the processes of the following steps S 13 to S 15. On the other hand, when the control device 17 makes affirmative determination in step S16, outputs an image change signal including a command for terminating a power-saving display mode (discussed later) to display an image in the normal display mode (discussed later), makes negative determination in step S18 and then goes to step S12, the control device 17 determines in step S12 that no specific operation is conducted (NO in step S12), and then executes the process of step S11. In addition, when the control device 17 makes affirmative determination in step S16, outputs an image change signal including a command for maintaining the power-saving display mode (discussed later), makes negative determination in step S18 and then goes to step S12, the control device 17 determines in step S12 that the specific operation is conducted (YES in step S12) and then sequentially executes the processes of steps S13 to S15.

On the other hand, when an operation for turning off the power of the navigation system 11, such that a termination signal from the ignition switch is input or a termination of the termination is selected with the operating unit 27, is conducted (YES in step S 18), the control device 17 ends the luminance need determination routine.

Next, the illuminating control routine will be described. The display control unit 21, as in the case of the luminance need determination routine, starts the illuminating control routine when the power of the navigation system 11 turns on on the basis of an output signal from the ignition switch (not shown).

In step S21, the display control unit 21 determines whether image information about an image to be displayed on the screen of the display 20 is input from the control device 17. In step S21, when it is determined that no image information is input (NO in step S21), the display control unit 21 repeatedly executes the determination process of step S21 until the image information is input. On the other hand, when it is determined that the image information is input (YES in step S21), the display control unit 21 controls the display device 19 so that the image based on the image information is displayed on the screen of the display 20 in the next step S22.

At this time, when the input image information includes normal luminance information, the display control unit 21 controls the light sources of the backlight 26 so that the luminance of the entire screen of the display 20 is uniformly high.

On the other hand, when the input image information includes specific luminance information, the display control unit 21 controls the light sources of the backlight 26 so that the luminance is varied among areas on the screen of the display 20 (in the present embodiment, it may be translated into "among images displayed on the screen"). As an example, when a plurality of images are displayed on the screen in an overlapping manner, the display control unit 21 controls the backlight 26 so that the luminance of the image displayed in the lower layer is low and the luminance of the image displayed in the upper layer is high.

Note that, in the present embodiment, a display mode for displaying the image with the luminance of the entire screen uniformly increased is termed "normal display mode", and a display mode for displaying the image with the luminance among the areas on the screen varied is termed "power-saving display mode".

Subsequently, in step S23, the display control unit 21 determines whether an image change signal is input from the control device 17. In step S23, when it is determined that no image change signal is input (NO in step S23), the display control unit 21 goes to step S26 (discussed later). On the other hand, when it is determined that an image change signal is input (YES in step S23), the display control unit 21 goes to the next step S24 and then determines whether an image is displayed on the screen of the display 20 in the power-saving display mode. In step S24, when it is determined that an image is displayed on the screen of the display 20 in the normal display mode (NO in step S24), the display control unit 21 goes to step S26 (discussed later).

On the other hand, when it is determined that an image is displayed on the screen of the display 20 in the power-saving display mode (YES in step S24), the display control unit 21 goes to the next step S25 and then changes the power-saving display mode to the normal display mode. Specifically, the display control unit 21 controls the light sources of the backlight 26 so that the luminance of the entire display screen is uniformly increased.

Then, in step S26, the display control unit 21 determines whether the power of the navigation unit 13 is turned off. In step S26, when it is determined that the power of the navigation unit 13 is not turned off (NO in step S26), the display control unit 21 goes to step S21. On the other hand, when an operation for turning off the power of the navigation system 11, such that a termination signal from the ignition switch is input or a termination of the termination is selected with the operating unit 27, is conducted (YES in step S26), the display control unit 21 ends the illuminating control routine.

Next, the operation of the navigation system according to the present embodiment will be described particularly focusing on determination as to the luminance need of an image displayed on the screen of the display 20 and control over the power consumption of the display 20. Note that, in the description, on the screen of the display 20, a map image that indicates the current location of the host vehicle is displayed in advance and then a menu image for re-searching for a route to a destination (a re-search menu image) is displayed through operation of the passenger of the vehicle.

When the ignition switch of the host vehicle is turned on and then the power of the navigation system 11 turns on, a map image that indicates a location around the current location of the host vehicle is displayed on the screen of the display 20, and a thumbnail image that indicates the host vehicle is displayed at the current location of the host vehicle on the map image. At this time, because no specific operation is conducted by the passenger of the host vehicle, the map image that includes the thumbnail image of the host vehicle is displayed on the screen of the display 20 in the normal display mode. When the host vehicle moves in this state, the map image displayed on the screen of the display 20 gradually changes in synchronization with the movement of the host vehicle. Even when the map image displayed on the screen changes in this way, the display 20 maintains the normal display mode unless the specific operation is conducted.

Then, when the passenger of the host vehicle conducts the specific operation requiring to display the re-search menu image on the map image in an overlapping manner with the operating unit 27, the luminance need of the re-search menu image and the luminance need of the map image are determined. In this case, it is determined that the luminance need of the re-search menu image is higher than the luminance need of the map image because the re-search menu image is displayed in the upper layer with respect to the map image. Then, the control device 17 outputs image information (in this case, image information about the re-search menu image and the map image) that includes specific luminance information to the display control unit 21.

Then, the map image, which is the lower layer image, is displayed on the screen of the display 20. At this time, for the passenger of the vehicle, the importance of re-searching for a route to the destination is higher than the importance of information about the current location of the host vehicle, a location around the current location, and the like. Therefore, the backlight 26 decreases the luminance of an area (entire screen at this moment) that displays the map image on the screen as compared with the luminance in normal display mode.

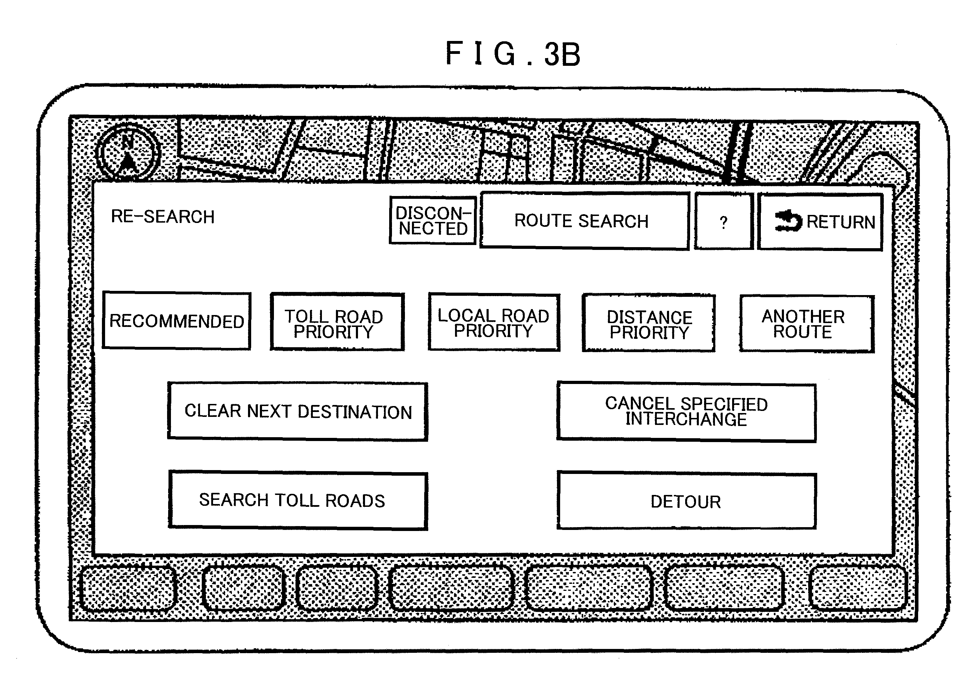

After that, the re-search menu image, which is the upper layer image, is displayed on the map image in an overlapping manner at the center of the screen of the display 20. As described above, the luminance need of the re-search menu image is higher than the luminance need of the map image. Therefore, the backlight 26 increases the luminance of an area that displays the menu image as compared with the luminance of the other area on the screen of the display 20. Specifically, the light sources of the backlight 26 are controlled so that the amount of light from the light sources that illuminate the area displaying the menu image is larger than the amount of light from the light sources that illuminate the other area. Then, as shown in FIG. 3B, the map image in the lower layer is displayed with a low luminance, and the re-search menu image in the upper layer is displayed with a high luminance.

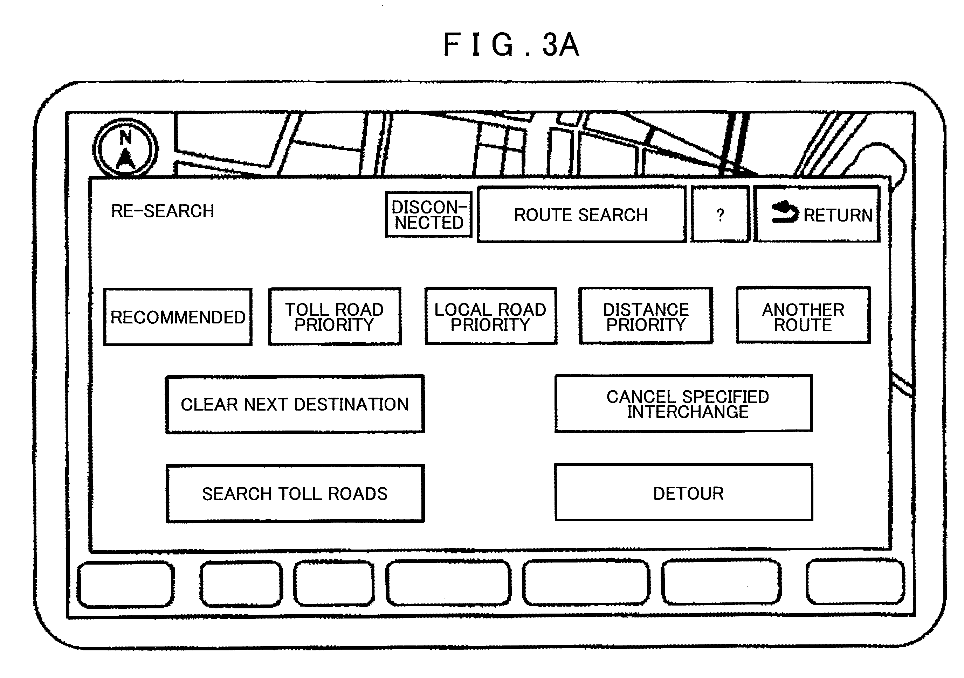

Here, as shown in FIG. 3A, when the luminance of the area that displays the map image for the route re-search is substantially equal to the luminance of the area that displays the menu image, it is difficult to reduce the power consumption in the display 20. In contrast, in the present embodiment, the luminance of the area that displays the map image is decreased as compared with the luminance of the area that displays the re-search menu image. By so doing, different from the case shown in FIG. 3A, it is possible to reduce the power consumption in the display 20. In addition, different from a case where all the light sources of the backlight 26 are turned off in order to reduce the power consumption, the most important information (image) at that moment for the passenger of the host vehicle is displayed on the screen.

Then, when the passenger of the host vehicle touches the screen shown in FIG. 3B to complete an operation for the route re-search, the re-search menu image is cleared from the screen. Subsequently, the display 20 changes from the power-saving display mode to the normal display mode. That is, the thumbnail image that indicates the current location of the host vehicle and the map image that includes a line indicating the route are displayed on the screen of the display 20 in the normal display mode.

According to the first embodiment, the following advantageous effects may be obtained.
(1) In the navigation unit 13 according to the present embodiment, the control device 17 determines the luminance need of each image on the basis of image information of a plurality of images displayed on the display 20. The luminance need is the degree of luminance required by each image on the screen of the display 20. Then, the display control unit 21 controls the power consumption of the backlight 26 corresponding to each image so as to display an image having a high luminance need with a high luminance and display an image having a low luminance need with a low luminance such that the magnitude relationship of the luminance among the respective images corresponds with the magnitude relationship among the determined luminance needs. Therefore, images each having different luminance may be displayed on the same screen at the same time. This eliminates the necessity of a complicated operation. Thus, it is possible to improve the convenience for the passenger of the host vehicle, who is a user of the navigation unit 13 according to the present embodiment, while reducing the power consumption.

(2) In the navigation unit 13 according to the present embodiment, it is determined that an image having a high luminance need has high importance at that moment and is displayed with a high luminance. On the other hand, it is determined that an image having a low luminance need has low importance at that moment and is displayed with a low luminance. Therefore, an image that presumably has low importance on the screen of the display 20 is displayed with a low luminance, so it is possible to emphasize an image having high importance, which is required by the passenger of the host vehicle.

(3) In the navigation unit 13 according to the present embodiment, when a plurality of images are hierarchically displayed on the display 20 in an overlapping manner, the luminance need is determined for each of the images that are displayed in an overlapping manner. Specifically, it is determined that the luminance need of the image displayed in the upper layer is higher than the luminance need of the image displayed in the lower layer. Then, the image in the upper layer is displayed with a high luminance and the image in the lower layer is displayed with a low luminance on the basis of the luminance needs of the respective images. Normally, when a plurality of images are displayed in the screen in an overlapping manner, the image having information that is presumably required by the passenger of the host vehicle at that moment is displayed in the upper layer with respect to the other image. Thus, an image in the upper layer, having a high need for display (high importance at that moment) for the passenger of the host vehicle, is displayed so as to allow the passenger of the host vehicle to easily visually recognize the image, while it is possible to effectively reduce the power consumption.

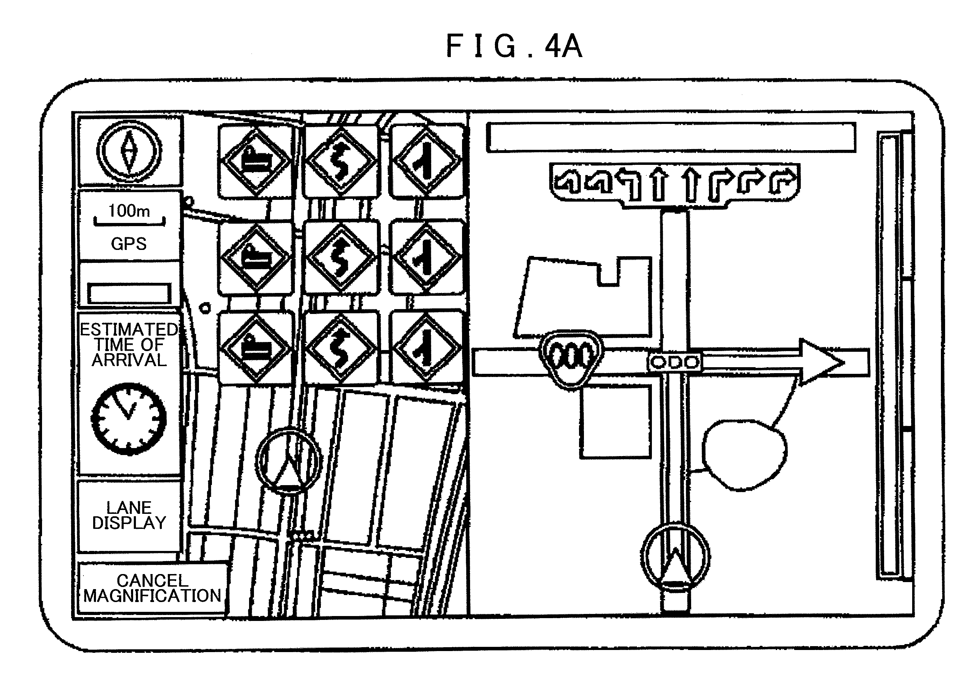

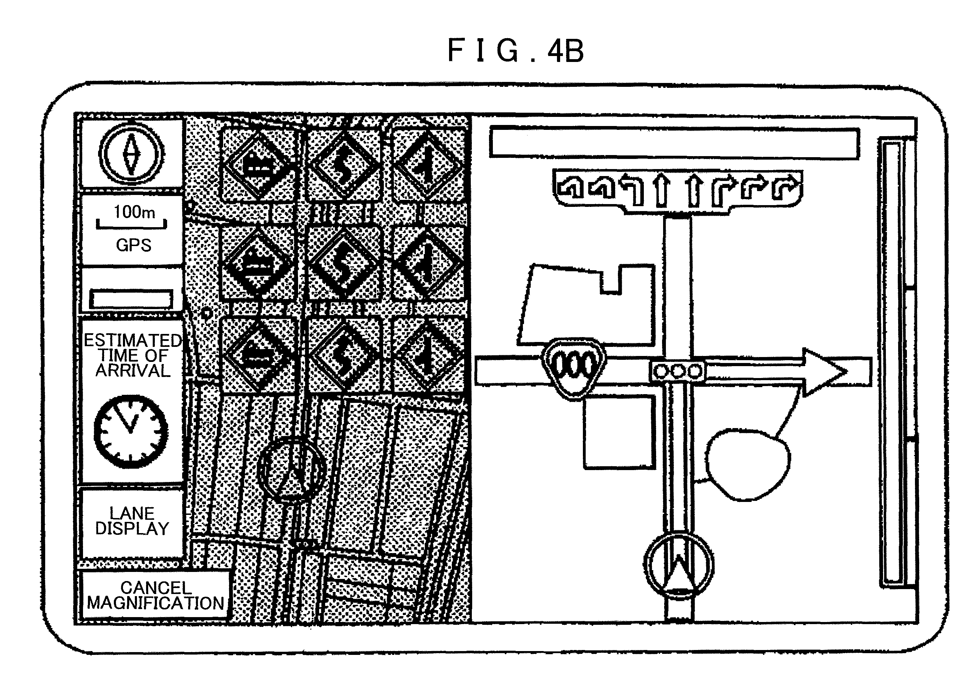

Next, a second embodiment of the present invention will be described with reference to FIG. 4A and FIG. 4B. Note that the second embodiment differs from the first embodiment in that a method of determining the luminance need in the luminance need determination routine executed by the navigation unit 13. In addition, the other configuration is substantially the same as that of the first embodiment. Therefore, the difference from the first embodiment will be mainly described. Like reference numerals denote similar components, and the overlap description is omitted.

Within the display processing routine executed by the navigation system 11 according to the present embodiment, a luminance determination routine that is partially different from that of the first embodiment will be described focusing on the difference from the first embodiment.

In step S12, the control device 17 determines whether a specific operation by which an image is displayed on the display 20 in the power-saving display mode is conducted. In step S12, when it is determined that no specific operation is conducted (NO in step S12), the control device 17 goes to the above described step S11.

On the other hand, when it is determined in step S12 that the specific operation is conducted (YES in step S12), the control device 17 goes to the next step S13 and then generates image information on the basis of the map data loaded from the map information storage unit 18. For example, in a state where a route along which the host vehicle travels to a destination is set, when the host vehicle approaches a road junction, such as an intersection, the control device 17 generates image information for displaying a map image having a currently set magnification (hereinafter, also referred to as "regular map information") and image information for displaying a map image of which the road junction and its vicinities are magnified by a magnification higher than the currently set magnification (hereinafter, also referred to as "detailed map information"). Note that a map image based on the detailed map information is an image for displaying information at the road junction and its vicinities in details.

Then, in the next step S14, the control device 17 determines the luminance need of each image on the basis of the image information acquired in step S 13. For example, when a plurality of map images are displayed side by side on the screen of the display 20, the control device 17 determines that the luminance need of the map image that includes detailed information is higher than the luminance need of the map image having the currently set magnification. In other words, the control device 17 decreases the luminance of the map image having the currently set magnification with respect to the luminance of the map image that includes the detailed information.

Subsequently, in the next step S15, the control device 17 adds specific luminance information based on the luminance need determined in step S14 to a corresponding pieces of image information, and then outputs the image information including the specific luminance information to the display control unit 21.

Next, the operation of the thus configured navigation system according to the second embodiment will be described with reference to FIG. 4A and FIG. 4B particularly focusing on determination as to the luminance need of an image displayed on the screen of the display 20 and control over the power consumption of the display 20. Note that, in the description, a route to a destination is set, and a map image that includes the set route is displayed on the screen of the display 20.

When the host vehicle travels toward the destination along the set route, the displayed map image changes as the host vehicle moves, on the screen of the display 20. At this time, even when no specific operation is conducted by the passenger of the host vehicle, the map image is displayed on the screen of the display 20 in the normal display mode. Then, when the host vehicle approaches an intersection at which a right turn or a left turn is intended along the set route, the control device 17 generates not only regular map information about the map image having the currently set magnification but also detailed map information about the map image that includes detailed information around the intersection. Then, the regular map information and detailed map information that include specific luminance information are output to the display control unit 21.

Then, as shown in FIG. 4B, a map image based on the regular map information is displayed at the left side in the screen of the display 20, and a map image based on the detailed map information is displayed at the right side in the screen. At this time, the importance of the map image based on the regular map information is lower than the importance of the map image based on the detailed map information. Therefore, the backlight 26 decreases the luminance of an area in the screen, which displays the map image based on the regular map information, as compared with the luminance in normal display mode. On the other hand, the backlight 26 equalizes the luminance of an area in the screen, which displays the map image based on the detailed map information, with the luminance in normal display mode. That is, the map image based on the regular map information is displayed with a high luminance, and the map image based on the detailed map information is displayed with a low luminance.

Here, as shown in FIG. 4A, when the luminance of the area that displays the map image based on the regular map information is substantially equal to the luminance of the area that displays the map image based on the detailed map information, it is difficult to reduce the power consumption in the display 20. In contrast, in the present embodiment, the luminance of the area that displays the map image based on the regular map information is decreased as compared with the luminance of the area that displays the map image based on the detailed map information. By so doing, different from the case shown in FIG. 4A, it is possible to reduce the power consumption in the display 20. In addition, different from a case where all the light sources of the backlight 26 are turned off in order to reduce the power consumption, the most important information (image) at that moment for the passenger of the vehicle is displayed on the screen.

Then, when the right turn or the left turn of the host vehicle is complete, the map image based on the detailed map information is cleared from the screen of the display 20. Then, the map image based on the regular map information is displayed on the entire screen in the normal display mode.

According to the second embodiment, the following advantageous effect may be obtained in addition to the advantageous effects (1) and (2) described in the first embodiment.
(4) With the navigation unit 13 according to the present embodiment, when a plurality of map images are displayed side by side on the display 20, the luminance need of each map image is determined depending on the level of details of information included in each map image. Specifically, it is determined that the luminance need of the image that includes more detailed map information (detailed map information) is higher than the luminance need of the image that includes the other map information (regular map information). Then, on the screen of the display 20, the map image based on the detailed map information is displayed with a high luminance, and the map image based on the regular map information is displayed with a low luminance. Normally, when a plurality of images are displayed side by side in the screen, the passenger of the host vehicle needs the image that includes more detailed map information. Thus, a map image having a high need for display for the passenger of the host vehicle is displayed on the screen so as to allow the passenger of the host vehicle to easily visually recognize the image, while it is possible to effectively reduce the power consumption.

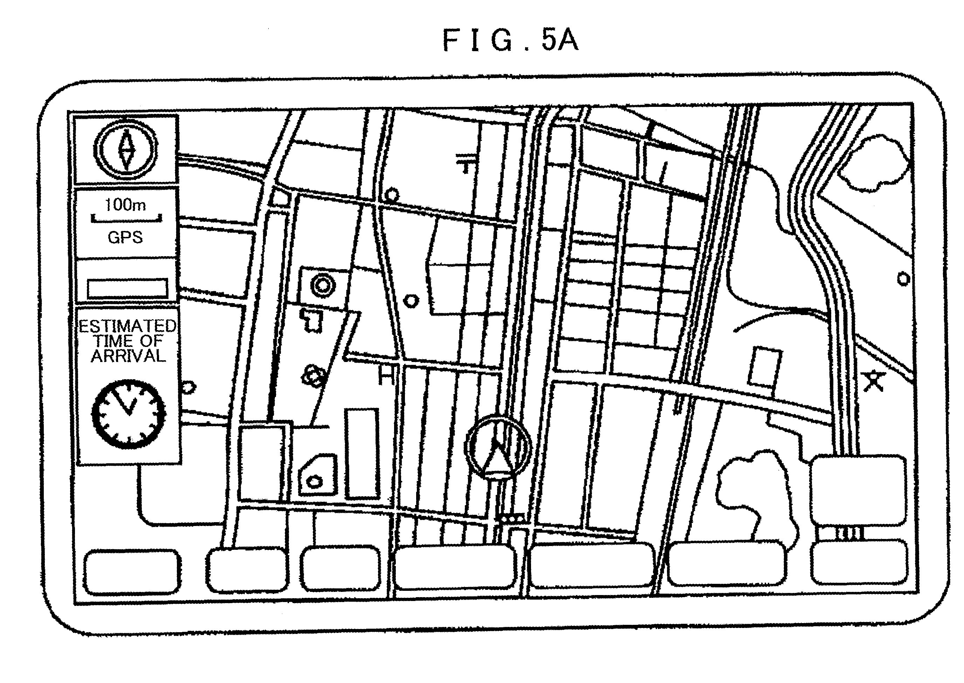

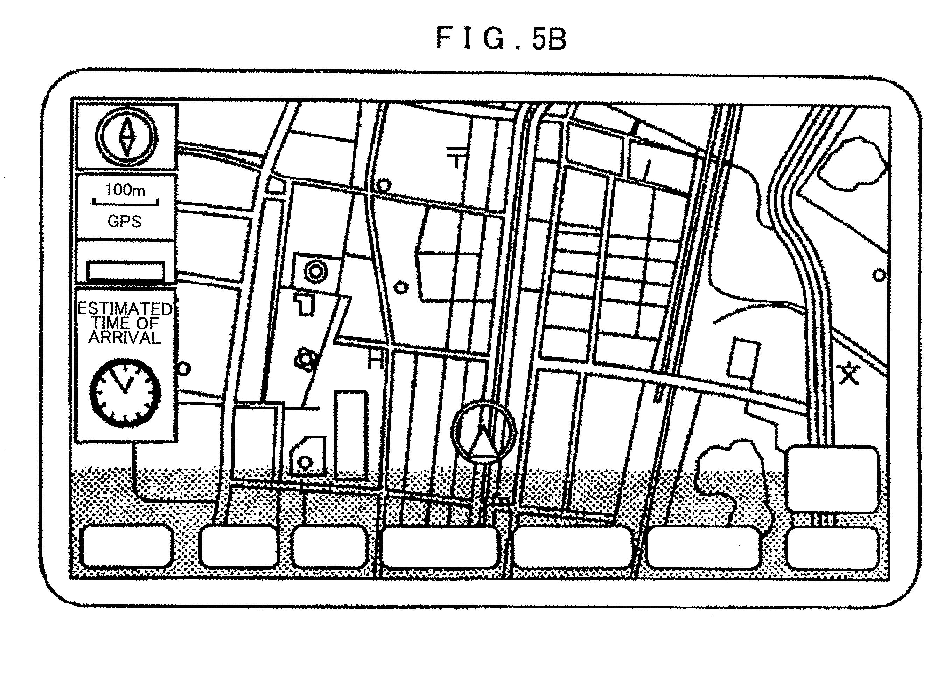

Next, a third embodiment of the present invention will be described with reference to FIG. 5A and FIG. 5B. Note that the third embodiment differs from the first and second embodiments in that a method of determining the luminance need in the luminance need determination routine executed by the navigation unit 13. In addition, the other configuration is substantially the same as those of the first and second embodiments. Therefore, the difference from the first and second embodiments will be mainly described. Like reference numerals denote similar components, and the overlap description is omitted.

Within the display processing routine executed by the navigation system 11 according to the present embodiment, a luminance determination routine that is partially different from those of the first and second embodiments will be described focusing on the difference from the first and second embodiments.

As in the case of the first and second embodiments, when the power of the navigation system 11 turns on on the basis of an output signal from the ignition switch (not shown), the control device 17 of the navigation unit 13 starts the luminance need determination routine.

In step S12, the control device 17 determines whether a specific operation by which an image on the display 20 is displayed in the power-saving display mode is conducted. The specific operation in the present embodiment is an operation that is conducted with the operating unit 27 of the display device 19 and requires the display 20 to display an image in the power-saving display mode in a state where no route to a destination is set. In step S12, when it is determined that no specific operation is conducted (NO in step S12), the control device 17 goes to the above described step S11.

On the other hand, when it is determined in step S12 that the specific operation is conducted (YES in step S12), the control device 17 goes to the next step S13 and then generates image information on the basis of the map data loaded from the map information storage unit 18. Specifically, the control device 17 loads a plurality of pieces of map data around the current location of the host vehicle, and then generates image information (hereinafter, referred to as "forward map information") for displaying a map image of the current location of the host vehicle and an area ahead of the current location in the travelling direction. In addition, the control device 17 generates image information (hereinafter, referred to as "rearward map information") for displaying a map image of an area behind the current location of the host vehicle in the travelling direction.

Then, in the next step S14, the control device 17 determines the luminance need of each image on the basis of the image information acquired in step S13. For example, when a map image that includes a thumbnail image indicating the host vehicle is displayed on the screen of the display 20, the control device 17 determines that the luminance need of the map image of the current location of the host vehicle and the area ahead of the current location in the travelling direction is higher than the luminance need of the map image behind the current location of the host vehicle in the travelling direction. In other words, the control device 17 decreases the luminance of the map image behind the current location of the host vehicle in the travelling direction with respect to the luminance of the map image of the current location of the host vehicle and the area ahead of the current location in the travelling direction.

Subsequently, in the next step S15, the control device 17 adds specific luminance information based on the luminance need determined in step S14 to a corresponding one of the pieces of image information, and then outputs the image information including the specific luminance information to the display control unit 21.

Next, the operation of the thus configured navigation system according to the third embodiment will be described with reference to FIG. 5A and FIG. 5B particularly focusing on determination as to the luminance need of an image displayed on the screen of the display 20 and control over the power consumption of the display 20. Note that, in the description, no route to a destination of the host vehicle is set.

When the host vehicle travels in a state where no route to a destination of the host vehicle is set, a map image that includes a thumbnail image indicating the host vehicle is displayed on the screen of the display 20, as shown in FIG. 5A. When the specific operation is conducted by the passenger of the host vehicle in this state, the display 20 displays an image in the power-saving display mode.

Here, when no destination is set or no route to a destination is set, information ahead of the host vehicle in the travelling direction is mostly required by the passenger of the host vehicle as compared with information behind the host vehicle in the travelling direction. Then, the control device 17 according to the present embodiment determines that the luminance need of a map image based on the forward map information is higher than the luminance need of a map image based on the rearward map information. Therefore, the backlight 26 decreases the luminance of an area in the screen, which displays the map image based on the rearward map information, as compared with the luminance in normal display mode. On the other hand, the backlight 26 equalizes the luminance of an area in the screen, which displays the map image based on the forward map information, with the luminance in normal display mode. That is, on the screen of the display 20, as shown in FIG. 5B, the map image based on the forward map information is displayed with a high luminance, and the map image based on the rearward map information is displayed with a low luminance.

That is, in the present embodiment, in the map image displayed on the screen, the area having low importance, that is, the area behind the current location of the host vehicle in the travelling direction, is displayed with a luminance lower than that of an area other than the above area, that is, the current location of the host vehicle and the area ahead of the current location in the travelling direction. Therefore, the power consumption of the display 20 may be reduced as compared with the case shown in FIG. 5A. In addition, different from the case where all the light sources of the backlight 26 are turned off in order to reduce the power consumption, the most important information (image) at that moment for the passenger of the vehicle is displayed on the screen.

According to the present embodiment, the following advantageous effects may be obtained in addition to the advantageous effects (1) and (2) described in the first and second embodiments.
(5) With the navigation unit 13 according to the present embodiment, when a map image that indicates the current location of the host vehicle is displayed on the display 20, the luminance need of each area of the map image is determined on the basis of a positional relationship with respect to the current location of the host vehicle in the travelling direction. Specifically, it is determined that the luminance need of an area in the map image ahead of the current location of the host vehicle in the travelling direction is higher than the luminance need of an area in the map behind the current location of the host vehicle in the travelling direction. Then, on the screen of the display 20, the current location of the host vehicle and the area ahead of the current location in the travelling direction are displayed with a high luminance, and the area behind the current location of the host vehicle in the travelling direction is displayed with a low luminance. Normally, when a map image that indicates the current location of the host vehicle is displayed in the screen, the passenger of the host vehicle needs an image ahead of the current location of the host vehicle in the travelling direction rather than an image behind the current location of the host vehicle in the travelling direction. Thus, a map image of an area ahead of the host vehicle in the travelling direction, having a high need for display for the passenger of the host vehicle, is displayed on the screen so as to allow the passenger of the host vehicle to easily visually recognize the image, while it is possible to effectively reduce the power consumption.

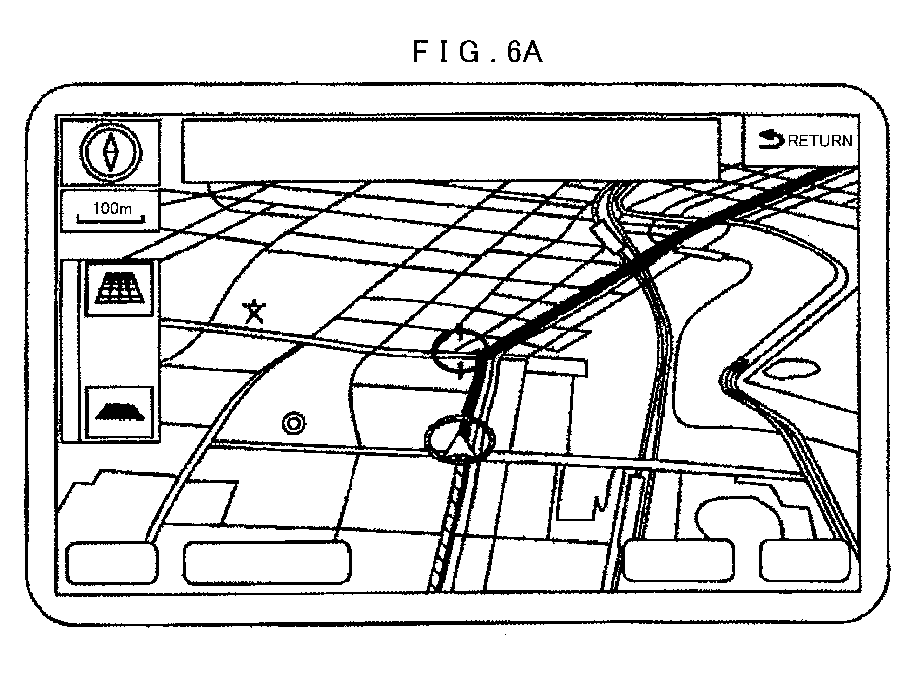

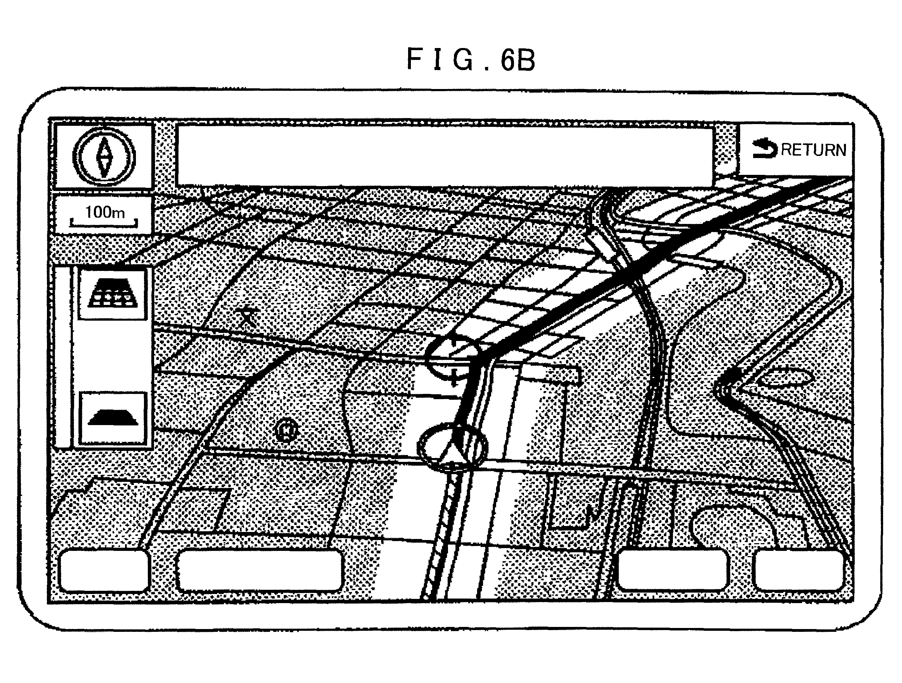

Next, a fourth embodiment of the present invention will be described with reference to FIG. 6A and FIG. 6B. Note that the fourth embodiment differs from the first to third embodiments in that a method of determining the luminance need in the luminance need determination routine executed by the navigation unit 13. In addition, the other configuration is substantially the same as those of the first to third embodiments. Therefore, the difference from the first to third embodiments will be mainly described. Like reference numerals denote similar components, and the overlap description is omitted.

Within the display processing routine executed by the navigation system 11 according to the present embodiment, a luminance determination routine that is partially different from those of the first to third embodiments will be described focusing on the difference from the first to third embodiments.

As in the case of the first to third embodiments, when the power of the navigation system 11 turns on on the basis of an output signal from the ignition switch (not shown), the control device 17 of the navigation unit 13 starts the luminance need determination routine.

In step S12, the control device 17 determines whether a specific operation by which an image is displayed on the display 20 in the power-saving display mode is conducted. The specific operation in the present embodiment is an operation that is conducted with the operating unit 27 of the display device 19 requires the display 20 to display an image in the power-saving display mode in a state where a route to a destination is set. In step S12, when it is determined that no specific operation is conducted (NO in step S12), the control device 17 goes to the above described step S11.

On the other hand, when it is determined in step S12 that the specific operation is conducted (YES in step S12), the control device 17 goes to the next step S13 and then generates image information on the basis of the map data loaded from the map information storage unit 18. Specifically, the control device 17 loads a plurality of pieces of map data around the current location of the host vehicle, and then generates image information (hereinafter, referred to as "route information") for displaying a map image that shows an area within a predetermined range along the route to the destination. In addition, the control device 17 generates pieces of image information (hereinafter, referred to as "surrounding map information") for displaying a map image that shows an area outside the predetermined range (in this case, map images on the right side and left side of the map image that shows the area within the predetermined range on the display screen).

Then, in the next step S14, the control device 17 determines the luminance need of each image on the basis of the image information acquired in step S 13. For example, when a map image that includes a route to a destination of the host vehicle is displayed on the screen of the display 20, the control device 17 determines that the luminance need of the map image based on the route information is higher than the luminance need of the map image based on the surrounding map information. In other words, the control device 17 decreases the luminance of the map image of the area outside the predetermined range as compared with the luminance of the map image that shows the area within the predetermined range along the route.

Subsequently, in the next step S15, the control device 17 outputs image information including the luminance need determined in step S 14 to the display control unit 21.

Next, the operation of the thus configured navigation system according to the fourth embodiment will be described with reference to FIG. 6A and FIG. 6B particularly focusing on determination as to the luminance need of an image displayed on the screen of the display 20 and control over the power consumption of the display 20. Note that, in the description, a route to a destination of the host vehicle is set.

When the host vehicle travels in a state where a route to a destination of the host vehicle is set, a map image that includes a thumbnail image indicating the host vehicle and a line indicating the route is displayed on the screen of the display 20, as shown in FIG. 6A. When the specific operation is conducted by the passenger of the host vehicle in this state, the display 20 displays an image in the power-saving display mode.

Here, when the destination and the route to the destination are set, information near the route is mostly required by the passenger of the host vehicle as compared with the other information. Then, the control device 17 according to the present embodiment determines that the luminance need of a map image based on the route information is higher than the luminance need of a map image based on the surrounding map information. Therefore, the backlight 26 decreases the luminance of an area that displays the map image based on the surrounding map information as compared with the luminance in normal display mode. On the other hand, the backlight 26 equalizes the luminance of the area in the screen, which displays the map image based on the route information, with the luminance in normal display mode. That is, on the screen of the display 20, as shown in FIG. 6B, the map image based on the route information is displayed with a high luminance, and the map image based on the surrounding map information is displayed with a low luminance.

That is, in the present embodiment, in the map image displayed on the screen, the area having low importance, that is, the area outside the predetermined range along the route, is displayed with a luminance lower than that of the area within the predetermined range along the route. Therefore, the power consumption of the display 20 may be reduced as compared with the case shown in FIG. 6A. In addition, different from a case where all the light sources of the backlight 26 are turned off in order to reduce the power consumption, the most important information (image) at that moment for the passenger of the vehicle is displayed on the screen.

According to the fourth embodiment, the following advantageous effect may be obtained in addition to the advantageous effects (1) and (2) described in the first to third embodiments. (6) With the navigation unit 13 according to the present embodiment, when a map image that shows a route to a destination of the host vehicle is displayed on the display 20, the luminance need of each area of the map image is determined on the basis of whether it falls within or outside the predetermined range along the route. Specifically, it is determined that the luminance need of the area in the map image within the predetermined range along the route is higher than the luminance need of the area in the map image outside the predetermined range along the route. Then, on the screen of the display 20, the area within the predetermined range along the route is displayed with a high luminance, and the area outside the predetermined range is displayed with a low luminance. Normally, when a map image that shows a route to a destination of the host vehicle is displayed on the display 20, the passenger of the host vehicle needs the map image within the predetermined range along the route rather than the map image outside the predetermined range along the route. Thus, the map image within the predetermined range, having a high need for display for the passenger of the host vehicle, is displayed on the screen so as to allow the passenger of the host vehicle to easily visually recognize the image, while it is possible to effectively reduce the power consumption.

Note that the above embodiments may be modified into the following alternative embodiments. In the first embodiment, when three or more images are hierarchically displayed in an overlapping manner, the image in the uppermost layer may be displayed with a high luminance, and the images in the other layers other than the uppermost layer may be displayed with a low luminance. In addition, the luminance of the image may be varied layer by layer.

In the second embodiment, when a plurality of map images are displayed side by side, the luminance of each map image may be set on the basis of the importance of each map image at that moment. For example, when the vehicle runs on a toll road, such as an expressway, a map image around an area along the toll road and an image that indicates a toll gate of the toll road, a service area, and the like, are displayed side by side on the screen of the display 20. At this time, the image that shows the toll gate of the toll road, the service area, and the like, may be displayed with a high luminance, and the map image around the area along the toll road may be displayed with a low luminance.

In addition, when the vehicle runs on a toll road, such as an expressway, a map image around an area along the toll road and an image that shows a junction of the toll road in detail are displayed side by side on the screen of the display 20. At this time, the image that shows the junction of the toll road in detail may be displayed with a high luminance, and the map image around the area along the toll highway may be displayed with a low luminance.

In the fourth embodiment, in the image within the predetermined range along the route, the area behind the current location of the host vehicle in the travelling direction may be displayed with a low luminance as in the case of the image outside the predetermined range. In this case, further power saving may be achieved.

In the fourth embodiment, even when a route to a destination is set, the area ahead of the host vehicle in the travelling direction in the map image may be displayed with a high luminance, and the area behind the host vehicle in the travelling direction may be displayed with a low luminance.

In the above embodiments, when an image is displayed in the power-saving mode, a color palette that determines colors of the image on the screen may be varied between an image displayed with a high luminance and an image displayed with a low luminance.

In the above embodiments, the display device 19 may be configured to include the display 20 that has an organic electroluminescence panel (also referred to as "organic EL panel"). The organic EL panel is configured to integrate a display unit with a illuminating unit. With the above configuration as well, similar advantageous effects to those of the above embodiments may be obtained.

In the above embodiments, the display control apparatus according to the aspect of the present invention is applied to the navigation system 11 equipped for the vehicle. However, application of the aspect of the present invention is not limited to the navigation system equipped for the vehicle; instead, the aspect of the present invention may be applied to a display device that has an image display screen, such as a television, a display of a personal computer and a cellular phone.
It is provided a display control apparatus comprising: a display unit that displays a plurality of images in respective areas on a screen; an illuminating unit that includes a plurality of light sources that are configured to be set so as to have different power consumptions each other, and that illuminates the images displayed on the display unit; a determination unit that determines a luminance need required on the screen for each of the images displayed on the display unit; and an illuminating control unit that controls the power consumptions of the light sources corresponding to the areas that display the respective images on the display unit on the basis of the determined luminance needs.

## Claims

1. A display control apparatus comprising:
a display unit that displays a plurality of images in respective areas on a screen;
a illuminating unit that includes a plurality of light sources that are configured to be set so as to have different power consumptions each other, and that illuminates the images displayed on the display unit;
a determination unit that determines a luminance need required on the screen for each of the images displayed on the display unit; and
a illuminating control unit that controls the power consumptions of the light sources corresponding to the areas that display the respective images on the display unit on the basis of the determined luminance needs.

2. The display control apparatus according to claim 1, wherein
the plurality of images are hierarchically displayed on the display unit in an overlapping manner, and
the determination unit determines that the luminance need of the image displayed in an upper layer is higher than the luminance need of the image displayed in a lower layer.

3. The display control apparatus according to claim 1, wherein
each of the plurality of images includes map information, and
the determination unit determines that a luminance need of the image that includes more detailed map information than map information that is included in other image is higher than a luminance need of the other image.

4. The display control apparatus according to claim 1, wherein
the plurality of images form a map image that includes map information that indicates a current location of a movable body, and
the determination unit determines that a luminance need of the image that includes map information ahead of the current location of the movable body in a travelling direction is higher than a luminance need of the image that includes map information behind the current location of the movable body in the travelling direction.

5. The display control apparatus according to claim 1, wherein
the plurality of images form a map image that includes map information that indicates a route of movable body from a current location to a destination, and
the determination unit determines that a luminance need of the image that includes map information within a predetermined range along the route of the movable body is higher than a luminance need of the image that includes map information outside the predetermined range along the route of the movable body.

6. The display control apparatus according to claim 1, wherein
the display unit and the illuminating unit are integrated.

7. The display control apparatus according to claim 1, wherein
the illuminating control unit reduces a power consumption of the light source corresponding to the area that displays the image of which the luminance need is relatively low as compared with a power consumption of the light source corresponding to the area that displays the image of which the luminance need is relatively high.

8. The display control apparatus according to claim 1, wherein
the illuminating control unit controls power consumptions of the light sources so that a luminance of the image of which the luminance need is relatively low is lower than a luminance of the image of which the luminance need is relatively high.

9. The display control apparatus according to claim 1, wherein
the determination unit determines that a luminance need of the image having relatively high importance is higher than a luminance need of the image having relatively low importance.

10. A navigation system comprising:
a current location detecting unit that detects a current location of a movable body;
a map information acquisition unit that acquires map information from a map information storage unit that stores the map information; and
the display control apparatus according to claim 1, wherein
the display control apparatus controls details displayed on a screen of the display unit on the basis of the current location of the movable body detected by the current location detecting unit and the map information acquired by the map information acquisition unit.

11. A display control method comprising:
displaying a plurality of images in respective areas on a screen;
illuminating the images with a plurality of light sources that are configured to be set so as to have different power consumptions each other;
determining a luminance need required on the screen for each of the images displayed on the screen; and
controlling the power consumptions of the light sources corresponding to the areas that display the respective images on the screen on the basis of the determined luminance needs.
